# EUROPEAN PATENT APPLICATION

(11) **EP 1 818 164 A2**
(43) Date of publication of application: **15.08.2007**
(21) Application number: 07102316.2
(22) Date of filing: 13.02.2007
(51) Int. Cl.: B29D 30/06, B29C 33/00

(54) **Loading device for loading green tires into a curing press**

(30) Priority: 14.02.2006 IT TO20060103
(71) Applicant: Bridgestone Corporation, Tokyo 104-8340 (JP)
(72) Inventor: Panicali, Marcello, 00122 Roma (IT); Muzi, Raffaele, 00040 Pomezia (IT)
(74) Representative: Jorio, Paolo

(57) **Abstract**

A loading device (5) for loading green tyres (3) into a curing press (4). The loading device (5) has a horizontal turntable (6) having a number of supports (7) for supporting green tyres (3) for curing; a vertical shaft (13) rotating about a vertical axis of rotation (8) and supporting the turntable (6); and an actuating device (9) having a motor (14) connected to the shaft (13) to rotate he turntable (6) in steps about the axis of rotation (8). The actuating device (9) has a variable-pitch worm (15) rotated by the motor (14) and having a zero-pitch portion; and a follower (16) fitted coaxially to the shaft (13) and engaging the worm (15) so that rotation of the worm (15) produces a corresponding rotation of the follower (16) about the axis of rotation (8) by an amount directly proportional to the pitch of the portion of the worm (15) engaged by the follower (16).

## Description

The present invention relates to a loading device for loading green tyres into a curing press.

A tyre production system comprises a curing press, into which green tyres are loaded successively for curing. The green tyres are normally loaded into the curing press using a loading device comprising a horizontal turntable with a number of supports, each housing a green tyre. In actual use, a number of green tyres are placed inside the supports on the turntable; and the turntable is rotated in steps to feed the supports successively to a loading station, where the green tyre in each support is removed from the support and inserted into the curing press. In this way, the press can successively cure a number of green tyres automatically, with no labour required.

One example of a device of the above type for loading green tyres into a curing press is described in Patent US3222715A1, in which the turntable is rotated by an electric motor connected mechanically to the turntable by gears. Rotation of the turntable, however, has proved inaccurate, on account of the considerable weight, and therefore high degree of inertia, of the turntable itself.

To improve rotation precision of the turntable, and therefore the accuracy with which the green tyre supports are positioned with respect to the curing press loading station, it has been proposed to employ a Maltese cross transmission between the electric motor and the turntable. A Maltese cross transmission, however, provides for no more than fairly accurate angular positioning of the turntable, and, what is more, produces a jerky movement of the turntable, with severe acceleration and deceleration, in turn resulting in rapid wear of the mechanical parts.

It is an object of the present invention to provide a loading device for loading green tyres into a curing press, designed to eliminate the aforementioned drawbacks, and which, in particular, is cheap and easy to produce.

According to the present invention, there is provided a loading device for loading green tyres into a curing press, as recited in the accompanying Claims.

A non-limiting embodiment of the present invention will be described by way of example with reference to the accompanying drawings, in which:
Figure 1 shows a schematic plan view of a green tyre curing station;
Figure 2 shows a view in perspective of a loading device of the Figure 1 curing station and in accordance with the present invention;
Figure 3 shows a front view of the Figure 2 loading device;
Figure 4 shows a larger-scale view in perspective of a detail of the Figure 2 loading device;
Figure 5 shows a larger-scale front view of a further detail of the Figure 2 loading device.

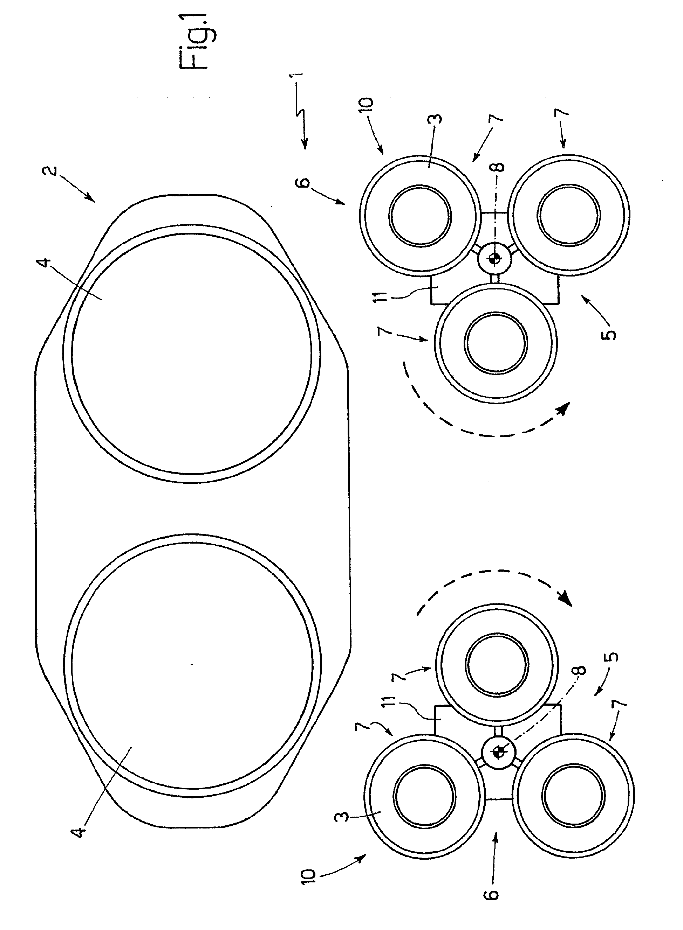

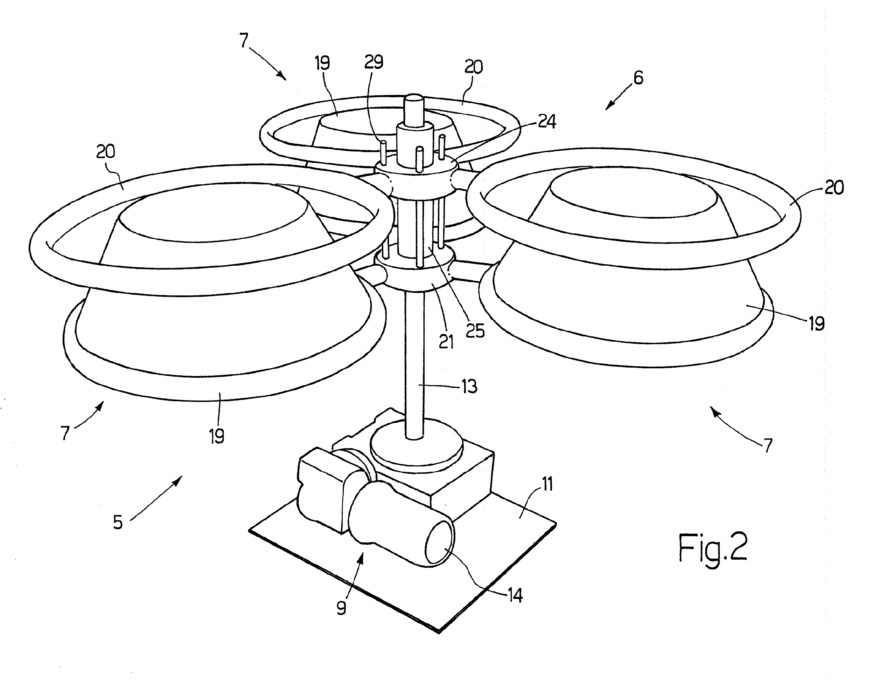

Number 1 in Figure 1 indicates as a whole a curing station comprising a curing unit 2 for curing green tyres 3 and having two curing presses 4 operating in parallel. Each curing press 4 has a loading device 5 comprising a horizontal turntable 6 with three supports 7 for housing three green tyres 3. Each turntable 6 is rotated in steps about a vertical central axis of rotation 8 by a respective electric actuating device 9 (shown in Figure 2).

In actual use, three green tyres 3 are placed inside the three supports 7 of each turntable 6; and actuating device 9 rotates turntable 6 about axis of rotation 8 to feed supports 7 successively to a loading station 10, where the green tyre 3 in each support 7 is inserted into curing press 4.

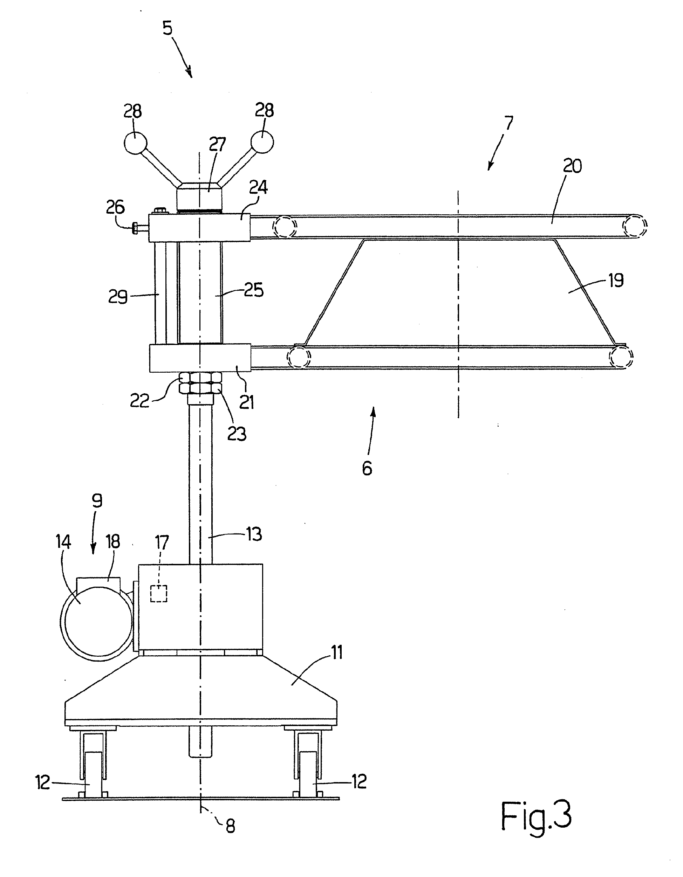

As shown in Figures 2 and 3, each loading device 5 comprises a base 11 mounted on wheels 12 and supporting for rotation a vertical shaft 13 coaxial with axis of rotation 8 and in turn supporting turntable 6. Respective actuating device 9 is fitted to base 11 and connected mechanically to shaft 13 to transmit rotation to shaft 13.

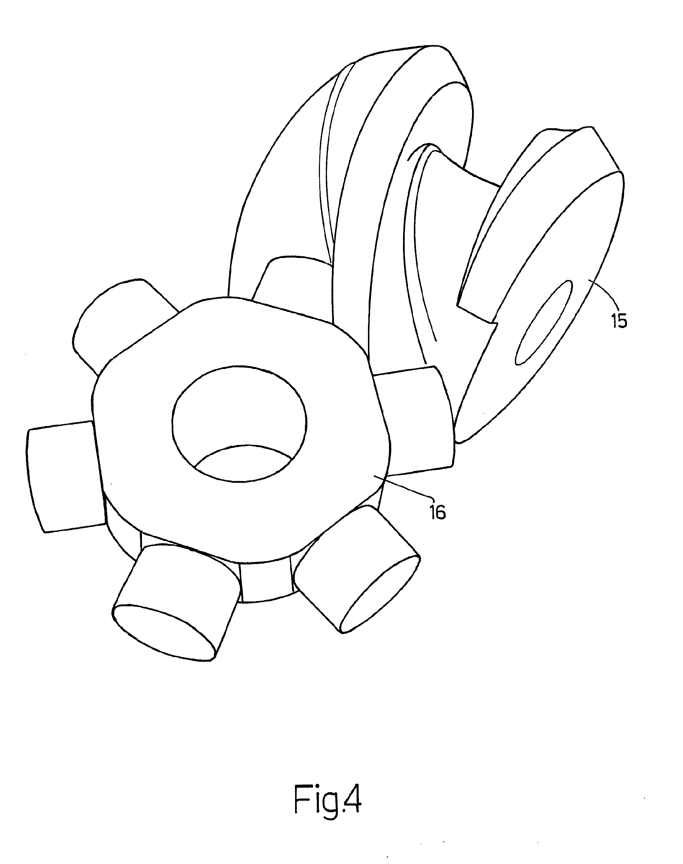

As shown in Figures 3 and 4, each actuating device 9 comprises an electric motor 14 which rotates a variable-pitch worm 15 (Figure 4) having a zero-pitch portion. A mechanical, fixed-reduction-ratio reducer is preferably interposed between electric motor 14 and worm 15 to reduce the rotation speed of the shaft of motor 14. Worm 15 is engaged by a follower 16 (Figure 4) fitted to shaft 13 so that rotation of worm 15 produces a corresponding rotation of follower 16 and shaft 13 about axis of rotation 8 by an amount directly proportional to the pitch of the portion of worm 15 engaged by follower 16. Obviously, when follower 16 engages the zero-pitch portion of worm 15, rotation of worm 15 produces no rotation of follower 16.

Worm 15 is designed and so connected to follower 16 that each complete turn of worm 15 rotates follower 16 and shaft 13 by 120° or by a submultiple of 120° (e.g. 30°) .

A sensor 17 determines the angular position of worm 15 in which follower 16 engages the zero-pitch portion of worm 15. By way of example, sensor 17 may be an induction sensor located close to the lateral surface of worm 15 to detect passage of a metal projection extending radially from the lateral surface of worm 15.

In actual use, the rest condition of actuating device 9, i.e. the condition in which actuating device 9 is idle and turntable 6 is stationary, is always made to coincide with the position in which follower 16 engages the zero-pitch portion of worm 15. A control unit 18 of loading device 5 receives a request from curing unit 2 to rotate turntable 6 by 120° about axis of rotation 8 to feed a green tyre 3 into loading station 10. Accordingly, control unit 18 activates electric motor 14 to rotate worm 15 and, consequently, follower 16, shaft 13, and turntable 6; and, upon sensor 17 detecting the angular position of worm 15 in which follower 16 engages the zero-pitch portion of worm 15, control unit 18 stops electric motor 14.

In other words, a complete turn of worm 15 always starts and ends in the angular position in which follower 16 engages the zero-pitch portion of worm 15, thus rotating follower 16 (and turntable 6) 120°.

By arresting rotation of worm 15 in the angular position in which follower 16 engages the zero-pitch portion of worm 15, worm 15 and, therefore, electric motor 14 need not be arrested in a particularly precise angular position. In fact, any error in the angular position of worm 15 in which follower 16 engages the zero-pitch portion of worm 15 has no effect on the angular position of follower 16. High-precision operation of electric motor 14 and sensor 17 not being essential, a low-cost, not particularly precise electric motor 14 and sensor 17 may therefore be employed.

Moreover, by appropriately designing the profile of worm 15, limited, constant acceleration and deceleration of follower 16 and, therefore, of turntable 6 may be achieved to prevent vibration and severe mechanical stress of the mechanical component parts.

As shown in Figures 2 and 3, each support 7 comprises a truncated-cone-shaped internal member 19, about which the bead bundle of a green tyre 3 rests. The truncated-cone shape of each internal member 19 makes it self-centring. Each support 7 also comprises a supporting ring 20 surrounding internal member 19, and on which the bottom side of a green tyre 3 rests to prevent the carcass of green tyre 3 from collapsing.

The three internal members 19 are fitted to and radiate from a bottom hub 21 coaxial with axis of rotation 8 and mounted to slide along vertical shaft 13. More specifically, the top portion of vertical shaft 13 is completely threaded, and an inner hole (not shown) of bottom hub 21 is also completely threaded to engage the thread of shaft 13. Bottom hub 21 rests on a nut 22, which is maintained in a fixed position along vertical shaft 13 by a corresponding locknut 23 tightened in the opposite direction to nut 22.

The three supporting rings 20 are fitted to and radiate from a top hub 24 coaxial with axis of rotation 8 and mounted to slide along vertical shaft 13 above bottom hub 21. More specifically, a threaded tubular liner 25 is interposed between vertical shaft 13 and hub 24, rests at the bottom on the top wall of bottom hub 21, and is threaded externally. An inner hole (not shown) of top hub 24 is completely threaded to engage the thread of tubular liner 25. Top hub 24 and tubular liner 25 can be locked to and angularly integral with vertical shaft 13 by means of at least one lock screw 26, which screws inside a threaded hole (not shown) formed radially through top hub 24 and tubular liner 25.

Tubular liner 25 is rotated by an adjusting hand-wheel 27 integral with tubular liner 25 and having two knobs 28. When lock screw 26 is released, adjusting hand-wheel 27 can be rotated to accordingly rotate tubular liner 25 and move top hub 24 up or down (depending on the rotation direction of tubular liner 25) along tubular liner 25 and with respect to bottom hub 21.

Top hub 24 is preferably connected to bottom hub 21 by three vertical rods 29, each of which extends upwards from bottom hub 21 and slides inside a through hole (not shown) formed through top hub 24. Connecting rods 29 make top hub 24 angularly integral at all times with bottom hub 21, while still permitting vertical movement of top hub 24 with respect to bottom hub 21.

Before operating loading device 5, the vertical height of supports 7, i.e. the internal member 19-supporting ring 20 assemblies, must be adjusted as a function of the position of loading station 10. This is done extremely rarely, and by releasing nut 22 and locknut 23, and manually rotating the whole of turntable 6 about vertical shaft 13 to move the whole of turntable 6 vertically along vertical shaft 13. Once the desired vertical position is set, bottom hub 21, and consequently turntable 6, is locked in position by tightening nut 22 and locknut 23.

Before operating loading device 5, the vertical distance between each internal member 19 and supporting ring 20 must also be adjusted as a function of the actual size of green tyres 3. The purpose of this adjustment is to set each supporting ring 20 at such a distance from internal member 19 that the bead bundle of green tyre 3 on relative support 7 contacts internal member 19, and the side of the green tyre contacts supporting ring 20.

The vertical distance between each internal member 19 and supporting ring 20 is adjusted, as described above, by releasing lock screw 26 and rotating adjusting hand-wheel 27 to accordingly rotate tubular liner 25 and move top hub 24 up or down (depending on the rotation direction of tubular liner 25) along tubular liner 25 and with respect to bottom hub 21. To simplify adjustment of the vertical distance between each internal member 19 and supporting ring 20, a millimetre scale is printed on or fixed to an outer surface of one of connecting rods 29, and marked to indicate the correct positions for each tyre size.

It should be pointed out that the above adjustments are always made manually, when loading device 5 is stationary, with no green tyres 3 on it.

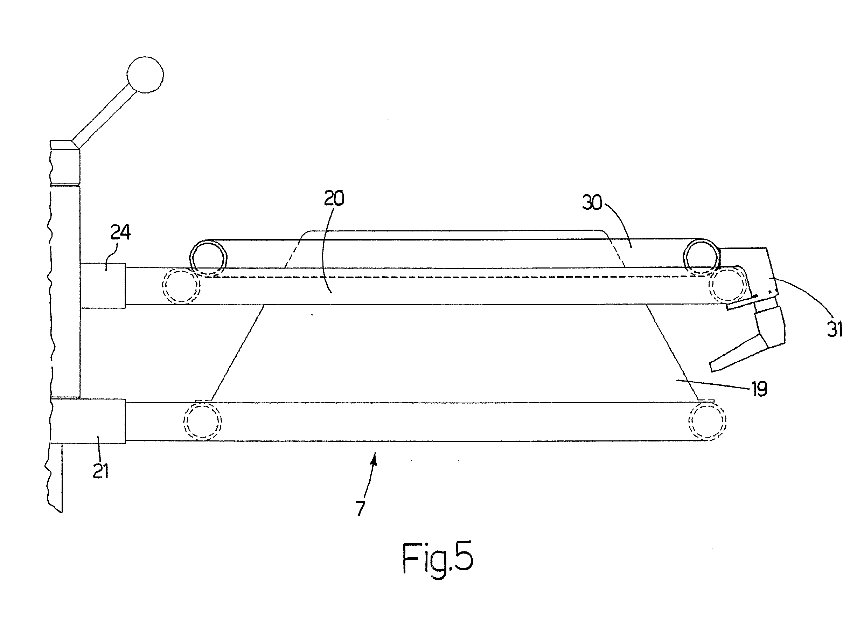

In the Figure 5 embodiment, each supporting ring 20 may be fitted with a further supporting ring 30 fixed to supporting ring 20 by means of at least one grip 31 and for supporting particularly small green tyres 3.

## Claims

1. A loading device (5) for loading green tyres (3) into a curing press (4); the loading device (5) comprising:
a horizontal turntable (6) having a number of supports (7), each for housing a green tyre (3) for curing;
a vertical shaft (13) rotating about a vertical axis of rotation (8) and supporting the turntable (6); and
an actuating device (9) having a motor (14) connected to the vertical shaft (13) to rotate he turntable (6) in steps about the axis of rotation (8);
the loading device (5) being **characterized in that** the actuating device (9) comprises:
a variable-pitch worm (15) rotated by the motor (14) and having a zero-pitch portion; and
a follower (16) fitted coaxially to the vertical shaft (13) and engaging the worm (15) so that rotation of the worm (15) produces a corresponding rotation of the follower (16) about the axis of rotation (8) by an amount directly proportional to the pitch of the portion of the worm (15) engaged by the follower (16).

2. A loading device (5) as claimed in Claim 1, wherein design of the worm (15) and connection of the follower (16) and the worm (15) are such that, for each complete turn of the worm (15), the follower is rotated by an angle equal to a complete turn divided by the number of supports (7), or equal to a submultiple of a complete turn divided by the number of supports (7).

3. A loading device (5) as claimed in Claim 1 or 2, wherein the actuating device (9) comprises a sensor (17) for determining the angular position of the worm (15) in which the follower (16) engages the zero-pitch portion of the worm (15).

4. A loading device (5) as claimed in Claim 3, wherein the sensor (17) is an induction sensor located close to the lateral surface of the worm (15), and which detects passage of a metal projection extending radially from the lateral surface of the worm (15).

5. A loading device (5) as claimed in one of Claims 1 to 4, wherein, in use, the rest condition of the actuating device (9) is always made to coincide with the position in which the follower (16) engages the zero-pitch portion of the worm (15).

6. A loading device (5) as claimed in one of Claims 1 to 5, wherein, in use, a complete turn of the worm (15) always starts and ends in the angular position in which the follower (16) engages the zero-pitch portion of the worm (15).

7. A loading device (5) as claimed in one of Claims 1 to 6, wherein the profile of the worm (15) is shaped to achieve limited, constant acceleration and deceleration of the follower (16).

8. A loading device (5) as claimed in one of Claims 1 to 7, and comprising a base (11), which supports in rotary manner the vertical shaft (13) supporting the turntable (6), and supports the actuating device (9) in a fixed position.

9. A loading device (5) as claimed in Claim 8, wherein the base (11) is mounted on wheels (12).

10. A loading device (5) as claimed in one of Claims 1 to 9, wherein each support (7) comprises a truncated-cone-shaped internal member (19), about which the bead bundle of a green tyre (3) rests; and a supporting ring (20) surrounding the internal member (19), and on which the bottom side of a green tyre (3) rests.

11. A loading device (5) as claimed in Claim 10, wherein the internal members (19) are fitted to a bottom hub (21) coaxial with the axis of rotation (8) and mounted to slide along the vertical shaft (13); and the supporting rings (20) are fitted to a top hub (24) coaxial with the axis of rotation (8) and mounted to slide along the vertical shaft (13), above the bottom hub (21).

12. A loading device (5) as claimed in Claim 11, wherein the top portion of the vertical shaft (13) is completely threaded, and an inner hole of the bottom hub (21) is also completely threaded to engage the thread of the vertical shaft (13).

13. A loading device (5) as claimed in Claim 12, wherein the bottom hub (21) rests on a nut (22) maintained in a fixed position along the vertical shaft (13) by a corresponding locknut (23).

14. A loading device (5) as claimed in Claim 11, 12 or 13, wherein a threaded tubular liner (25) is interposed between the vertical shaft (13) and the top hub (24), rests at the bottom on the top wall of the bottom hub (21), and is externally threaded; and an inner hole of the top hub (24) is completely threaded to engage the thread of the tubular liner (25).

15. A loading device (5) as claimed in Claim 14, wherein the top hub (24) and the tubular liner (25) are locked to the vertical shaft (13) by means of at least one lock screw (26).

16. A loading device (5) as claimed in Claim 14 or 15, wherein an adjusting hand-wheel (27), integral with the tubular liner (25), is provided to rotate the tubular liner (25).

17. A loading device (5) as claimed in Claim 14, 15 or 16, wherein the top hub (24) is connected to the bottom hub (21) by a number of vertical rods (29), each of which extends upwards from the bottom hub (21) and slides inside a through hole formed through the top hub (24).

18. A loading device (5) as claimed in one of Claims 10 to 17, wherein each support (7) comprises a further supporting ring (30) which, in use, is fixed to the supporting ring (20) by at least one clamp (31) to support small green tyres (3).

19. A loading device (5) for loading green tyres (3) into a curing press (4); the loading device (5) comprising:
a horizontal turntable (6) having a number of supports (7), each for housing a green tyre (3) for curing;
a vertical shaft (13) rotating about a vertical axis of rotation (8) and supporting the turntable (6); and
an actuating device (9) having a motor (14) connected to the vertical shaft (13) to rotate he turntable (6) in steps about the axis of rotation (8);
each support (7) comprises a truncated-cone-shaped internal member (19), about which the bead bundle of a green tyre (3) rests; and a supporting ring (20) surrounding the internal member (19), and on which the bottom side of a green tyre (3) rests;
the internal members (19) are fitted to a bottom hub (21) coaxial with the axis of rotation (8) and mounted to slide along the vertical shaft (13); and the supporting rings (20) are fitted to a top hub (24) coaxial with the axis of rotation (8) and mounted to slide along the vertical shaft (13), above the bottom hub (21);
the loading device (5) being **characterized in that** a threaded tubular liner (25) is interposed between the vertical shaft (13) and the top hub (24), rests at the bottom on the top wall of the bottom hub (21), and is externally threaded; and an inner hole of the top hub (24) is completely threaded to engage the thread of the tubular liner (25).

20. A loading device (5) as claimed in Claim 19, wherein the top hub (24) and the tubular liner (25) are locked to the vertical shaft (13) by means of at least one lock screw (26).

21. A loading device (5) as claimed in Claim 19 or 20, wherein an adjusting hand-wheel (27), integral with the tubular liner (25), is provided to rotate the tubular liner (25).

22. A loading device (5) as claimed in Claim 19, 20 or 21, wherein the top hub (24) is connected to the bottom hub (21) by a number of vertical rods (29), each of which extends upwards from the bottom hub (21) and slides inside a through hole formed through the top hub (24).

23. A loading device (5) as claimed in one of Claims 19 to 22, wherein the top portion of the vertical shaft (13) is completely threaded, and an inner hole of the bottom hub (21) is also completely threaded to engage the thread of the vertical shaft (13).

24. A loading device (5) as claimed in Claim 23, wherein the bottom hub (21) rests on a nut (22) maintained in a fixed position along the vertical shaft (13) by a corresponding locknut (23).
